# EUROPEAN PATENT SPECIFICATION

(11) **EP 3 082 335 B1**
(45) Date of publication and mention of the grant of the patent: **21.11.2018**
(21) Application number: 16162377.2
(22) Date of filing: 24.03.2016
(51) Int. Cl.: H04N 7/01, H04N 21/4402, H04N 21/431, H04N 21/488

(54) **PLAYBACK DEVICE FOR PLAYING VIDEO CONTENT AND OPERATING METHOD OF THE SAME**
WIEDERGABEVORRICHTUNG ZUM ABSPIELEN VON VIDEOINHALTEN UND BETRIEBSVERFAHREN DAFÜR
DISPOSITIF DE LECTURE POUR LA LECTURE DE CONTENU VIDÉO ET SON PROCÉDÉ DE FONCTIONNEMENT

(30) Priority: 13.04.2015 KR 20150052078
(43) Date of publication of application: 19.10.2016
(73) Proprietor: Samsung Electronics Co., Ltd., Gyeonggi-do 16677 (KR)
(72) Inventor: JEON, Hyoung-woo, Gyeonggi-do (KR)
(74) Representative: Hewett, Jonathan Michael Richard

(56) References cited:
- EP-A1- 2 230 839
- EP-A1- 2 262 230
- EP-A2- 1 225 762

## Description

The present invention relates to playing video content, and more particularly, to a playback device for efficiently playing 16:9-type 21:9 video content and an operating method of the playback device.

Playback devices, such as a Blu-ray disc player, a digital versatile disc (DVD) player, a personal computer (PC), or a video game machine, play multimedia content to display a video through a display device, such as a television (TV) or a monitor, which is connected to the playback devices.

In general, when video (e.g., movie) having an aspect ratio of 16 to 9 is displayed on a display screen having an aspect ratio of 21 to 9, the aspect ratio of the video may be converted to be displayed on the display screen. If the video is fully displayed on the 21:9 display screen, the displayed image of the video may look spread out horizontally. If black bars are on both sides of the screen (e.g., left and right sides of the screen, or top and bottom of the screen), an actual video size may be reduced. Also, when the black bar included in the video is removed and the remaining part of the video is fully displayed on the display screen, a graphic item displayed on the black bar may be removed.

European Patent Application EP 1,225,762 discloses a technique for dynamic adjustment of on-screen graphic displays to cope with different video display and/or display screen formats.

European Patent Application EP 2,230,839 discloses a technique of displaying content in accordance with presentation characteristics.

European Patent Application EP 2,262,230 discloses a technique of offsetting auxiliary video data for display at a particular aspect ratio.

According to aspects of the invention, there is provided a playback device according to claim 1, and an operating method of a playback device according to claim 6.

One or more exemplary embodiments of the present invention provide a playback device which converts a graphic item shown in a video to efficiently play video content having an aspect ratio of 16 to 9 on a display screen having an aspect ratio of 21 to 9, and an operating method of the playback device.

According to an aspect of an exemplary embodiment, there is provided a playback device for playing video content including: a controller configured to convert a graphic shown in a first video having a first aspect ratio by adjusting at least one of a size and a location of the graphic to position the converted graphic in a second video having a second aspect ratio, and mix the first video with the converted graphic; and an external device interface configured to transmit the mixed first video to a display device having the second aspect ratio, wherein the first video includes the second video and a black area. The first aspect ratio may be 16:9, and the second aspect ratio may be greater than 16:9.

The controller may be further configured to determine whether the first video includes a video having an aspect ratio greater than 16:9 based on the black area included in the first video.

The external device interface may be further configured to transmit the first video to the display device and receive video type information of the first video from the display device, and the controller is further configured to determine whether the first video has an aspect ratio of 16:9 and includes a video having an aspect ratio greater than 16:9 based on the video type information.

The external device interface may be further configured to transmit to the display device information indicating that the graphic included in the mixed first video is a converted graphic.

According to an aspect of another exemplary embodiment, there is provided an operating method of a playback device for playing video content including: converting a graphic shown in a first video having a first aspect ratio by adjusting at least one of a size and a location of the graphic to position the converted graphic in a second video having a second aspect ratio; mixing the first video with the converted graphic; and transmitting the mixed first video to a display device connected to the playback device and having the second aspect ratio, wherein the first video includes the second video and a black area.

The first aspect ratio may be 16:9, and the second aspect ratio may be greater than 16:9.

The operating method of the playback device may further include receiving device information from the display device, and determining whether the display device is a display device having the second aspect ratio.

The operating method of the playback device may further include determining whether the first video includes a video having an aspect ratio greater than 16:9 based on the black area included in the first video.

The operating method of the playback device may further include transmitting the first video to the display device; receiving video type information of the first video from the display device; and determining whether the first video has an aspect ratio of 16:9 and includes a video having an aspect ratio greater than 16:9 based on the video type information.

The transmitting the mixed video may include transmitting frame information indicating that the graphic is a converted graphic.

According to an aspect of still another exemplary embodiment, there is provided a non-transitory computer-readable recording medium storing a program that is executable by a computer to perform the operating method of the playback device.

According to an aspect of still another exemplary embodiment, there is provided a display device including: an external device interface configured to receive a video obtained by mixing a first video with a graphic, and adjustment information of the graphic from a playback device, the first video having a first aspect ratio and including a black area and a second video that has a second aspect ratio; and a controller configured to remove the black area from the mixed first video based on the graphic adjustment information to obtain the second video, control the second video to be displayed on a display having the second aspect ratio, and control the graphic to be positioned in the second video.

The external device interface may be further configured to receive the first video from the playback device, and the controller may be further configured to check video type information of the first video based on the black area included in the first video and control the video type information of the first video to be transmitted to the playback device.

According to an aspect of yet another exemplary embodiment, there is provided an operating method of a display device including: receiving a video obtained by mixing a first video with a graphic , and adjustment information of the graphic from a playback device, the first video having a first aspect ratio and including a black area and a second video that has a second aspect ratio; removing the black area from the mixed first video based on the graphic adjustment information to obtain the second video; controlling the second video to be displayed on a display having the second aspect ratio, and controlling the graphic to be positioned in the second video.

The operating method of the display device may further include receiving the first video from the playback device; checking video type information of the first video based on the black area included in the first video; and transmitting the video type information of the first video to the playback device.

According to an aspect of yet another exemplary embodiment, there is provided a non-transitory computer-readable recording medium storing a program that is executable by a computer to perform: determining an aspect ratio of a display device; determining that a moving image includes a main content area and a black bar area and the main content area includes a graphic overlaid on the moving image; determining whether an aspect ratio of the main content area is greater than the aspect ratio of the display device; and changing at least one of a location and a size of the graphic based on a difference between the aspect ratio of the main content area and the aspect ratio of the display device in response to the aspect ratio of the main content area being greater than the aspect ratio of the display device.

The graphic may correspond to at least one of an interactive graphic, a presentation graphic, and a background graphic (BG), an on-screen display graphic, and a subtitle.

The above and/or other aspects will be more apparent by describing certain exemplary embodiments, with reference to the accompanying drawings, in which:
FIG. 1 is a diagram showing a playback system for playing video content according to an exemplary embodiment;
FIG. 2 is a block diagram showing a configuration of a playback device for playing video content according to an exemplary embodiment;
FIG. 3 is a block diagram showing a configuration of a playback device for playing video content according to another exemplary embodiment;
FIG. 4 is a block diagram showing a configuration of a display device according to an exemplary embodiment;
FIG. 5A is a diagram showing 16:9-type 21:9 video content;
FIGS. 5B to 5D are diagrams showing examples of the 16:9-type 21:9 video content displayed on a display device having an aspect ratio of 21:9;
FIGS. 6A to 6C, 7A to 7C, and 8A to 8C are diagrams for describing how a playback device converts a 16:9-type 21:9 video into a video having an aspect ratio of 21:9 according to an exemplary embodiment;
FIG. 9 is a flowchart illustrating an operating method of a playback device according to an exemplary embodiment;
FIG. 10 is a sequence diagram illustrating an operating method of a playback system according to an exemplary embodiment;
FIGS. 11A to 11C are diagrams for describing how a playback device converts a 16:9-type 21:9 video into a video having an aspect ratio of 21:9 according to another exemplary embodiment;
FIG. 12 is a flowchart illustrating an operating method of a playback device according to another exemplary embodiment; and
FIG. 13 is a sequence diagram illustrating an operating method of a playback system according to another exemplary embodiment.

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

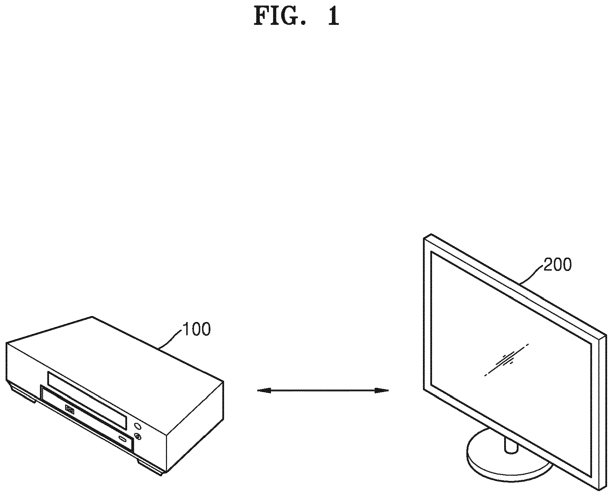

FIG. 1 is a diagram showing a playback system for playing video content according to an exemplary embodiment.

The playback system for playing video content according to the exemplary embodiment may include a playback device 100 and a display device 200.

The playback device 100 according to the exemplary embodiment represents a device capable of playing video content. The playback device 100 may include a Blu-ray disc player, a set-top box, a digital versatile disc (DVD) player, a game machine, a digital camera, a camcorder, a computer (laptop), and a cellular phone. However, the playback device 100 is not limited to these, and may be implemented in various forms.

Also, the display device 200 according to the exemplary embodiment represents a device capable of displaying video content played by the playback device 100. For example, the display device 200 may be connected to the playback device 100 through at least one of several ports, such as a high-definition multimedia interface (HDMI) port, a component jack, a personal computer (PC) port, a Universal Serial Bus (USB) port, etc., and may transmit or receive a video, audio, and additional information.

Alternatively, the display device 200 may be connected to the playback device 100 through short-range communication using a wireless local area network (WLAN) or Bluetooth, and transmit or receive a video, audio, and additional information.

The display device 200 according to the exemplary embodiment may be a television (TV). However, this is just an example, and the display device 200 may be implemented as an electronic device including a display. For example, the display device 200 may be implemented as a variety of electronic devices, such as a cellular phone, a tablet PC, a digital camera, a camcorder, a laptop computer, a desktop, an eBook terminal, a digital broadcast terminal, a personal digital assistant (PDA), a portable multimedia player (PMP), a navigation device, an MP3 player, and a wearable device. In particular, exemplary embodiments may be easily implemented in a display device having a large display, such as a TV, but are not limited thereto. Also, the display device 200 may be a fixed type or a movable type, and may be a digital broadcast receiver capable of receiving digital broadcasts.

The display device 200 may be implemented as a flat display device, a curved display device having a curvature, or a flexible display device that has an adjustable curvature. An output resolution of the display device 200 may include, for example, a high definition (HD) resolution, a full HD resolution, an ultra HD resolution, or a resolution higher than the ultra HD resolution. Also, the display device 200 according to the exemplary embodiment may be a display device having an aspect ratio of 21 to 9 (hereinafter, referred to as 21:9 display device).

Based on an aspect ratio of video content played by the playback device 100 and an aspect ratio of the display device 200 connected to the playback device 100, the playback device 100 according to the exemplary embodiment may adjust the size or the location of a graphic shown in the video (e.g., a graphic included in the video content, a graphic generated by the playback device 100, etc.), or the size or the location of the video.

Also, the playback device 100 may mix the graphic that has an adjusted size or location with the video, and transmit the mixed video to the display device 200 connected to the playback device 100. Alternatively, the playback device 100 may mix the graphic and the video each of which has an adjusted size or location, and transmit the mixed video to the display device 200. The display device 200 may display the video and the graphic received from the playback device 100 according to the size and the aspect ratio of the display.

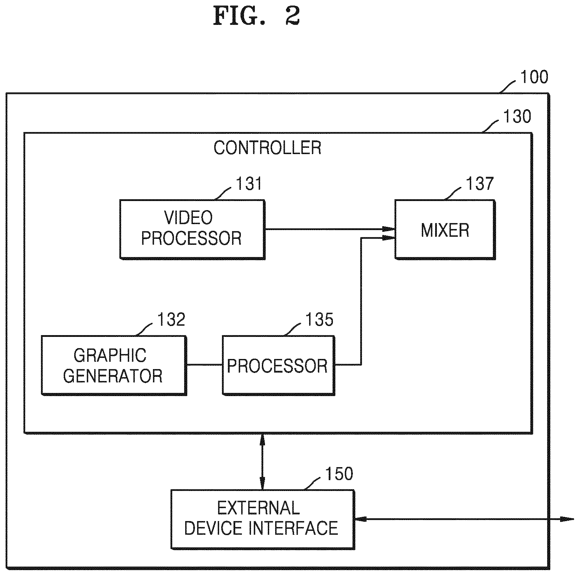

FIG. 2 is a block diagram showing a configuration of a playback device for playing video content according to an exemplary embodiment.

Referring to FIG. 2, the playback device 100 according to the exemplary embodiment may include a controller 130 and an external device interface 150, and the controller 130 may include a video processor 131, a graphic generator 132, a processor 135, and a mixer 137. The video processor 131, the graphic generator 132, the processor 135, and the mixer 137 may be implemented as separate pieces of hardware or in one chip in the form of a system-on-chip (SOC). Alternatively, the video processor 131, the graphic generator 132, the processor 135, and the mixer 137 may be implemented as a software code.

However, all the components shown in the drawing are not essential components. The playback device 100 may be implemented by more or fewer components than those shown in the drawing.

The above components will be sequentially described below.

The controller 130 controls the overall operation of the playback device 100. In other words, the controller 130 controls a process of playing video content in the playback device 100.

The video processor 131 processes video data received by the playback device 100. The video processor 131 may perform various types of image processing, such as decoding, scaling, noise filtering, frame rate conversion, resolution conversion, etc., on the video data.

Also, the video processor 131 may determine whether or not a black area (e.g., black pixel area) exists in a video. The black area may be generated when a black signal (e.g., a signal having 300 mv of a voltage level) is applied to the pixels in the black area. The video processor 131 may determine a format or a type of the video based on a location of the black area and a ratio of the black area to the entire area of the video.

According to an exemplary embodiment, when the video is a 21:9 video which is to be displayed on a 16:9 screen with a black area, the video processor 131 may remove the black area from the 21:9 video and then scale the video.

The graphic generator 132 may generate an on-screen display (OSD) signal according to a user input or a certain setting. For example, based on a user input signal, the graphic generator 132 may generate a signal for displaying various types of information as graphics or text on a screen. The generated OSD signal may include various types of data, such as a user interface (UI) screen, various menu screens, widgets, icons, etc. of the playback device 100.

The processor 135 may convert a graphic according to the type of the video processed by the video processor 131. For example, when the video includes a main content area having an aspect ratio of 21:9 and a black area and an overall aspect ratio of the video is 16:9, the processor 135 may adjust the size and the location of the graphic so that the graphic may be positioned in the scaled video. The video may be referred to as 16:9-type 21:9 video. A movie may be reproduced in the main content area and a subtitle may be displayed in the black area. The black area may correspond to horizontal black bars at the top and bottom of the movie in the main content area, vertical black bars at the left and right of the movie in the main content area, or black bars all around the movie in the main content area.

The mixer 137 may mix a video signal processed by the video processor 131 and the graphic converted by the processor 135.

When the size and the location of the graphic are adjusted, the controller 130 may generate information indicating that the graphic has been converted and include the information in frame information (e.g., an information frame).

The playback device 100 may further include an audio processor to process audio data. Various types of processing, such as decoding, amplification, noise filtering, etc., may be performed on audio data.

The external device interface 150 may be connected to an external device, such as the display device 200, via wired or wireless communication. The external device interface 150 may transmit a video, audio, or additional information processed by the controller 130 to the external device. The external device interface 150 may include an HDMI port, a component jack, a PC port, and a USB port. The external device interface 150 may include a wireless communicator capable of wireless communication using a WLAN or Bluetooth.

In an exemplary embodiment, the external device interface 150 may transmit the mixed video to the display device 200. Also, the external device interface 150 may transmit the information indicating that the graphic has been converted to the display device 200 through an information frame including information on a frame.

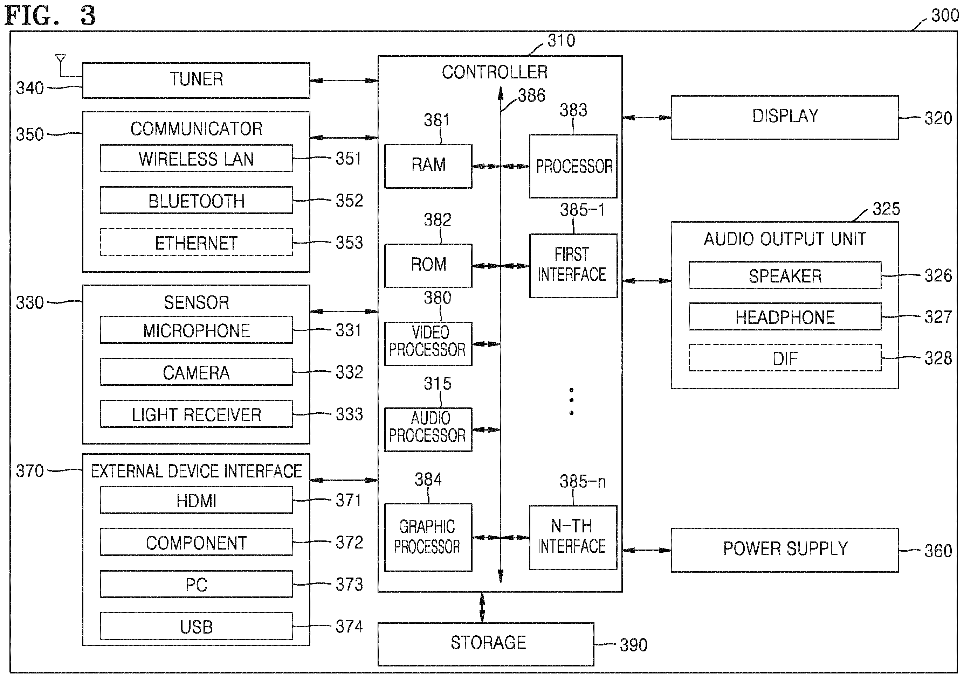

FIG. 3 is a block diagram showing a configuration of a playback device for playing video content according to another exemplary embodiment.

Referring to FIG. 3, a playback device 300 according to another exemplary embodiment may be implemented as a display device including a display. The playback device 300 may include a controller 310, a display 320, a sensor 330, a video processor 380, an audio processor 315, an audio output unit 325, a power supply 360, a tuner 340, a communicator 350, an external device interface 370, and a storage 390.

Meanwhile, the controller 310 corresponds to the controller 130 of FIG. 2, the video processor 380 corresponds to the video processor 131 of FIG. 2, the external device interface 370 corresponds to the external device interface 150 of FIG. 2, and thus substantially the same description in FIG. 3 as that in FIG. 2 will be omitted.

The display 320 displays a video included in a broadcast signal received through the tuner 340 under control of the controller 310. Also, the display 320 may output content (e.g., moving images) input through the communicator 350 or the external device interface 370 and a video stored in the storage 390. Further, the display 320 may display a voice UI (e.g., including a voice command guide) for performing a voice recognition task corresponding to voice recognition, or a motion UI (e.g., including a user motion guide for motion recognition) for performing a motion recognition task corresponding to motion recognition.

The audio processor 315 processes audio data. The audio processor 315 may perform various types of processing, such as decoding, amplification, or noise filtering on audio data. Meanwhile, the audio processor 315 may have a plurality of audio processing modules to process audio corresponding to a plurality of pieces of content.

The audio output unit 325 outputs audio included in the broadcast signal received through the tuner 340 under control of the controller 310. The audio output unit 325 may output audio (e.g., voice and sound) input through the communicator 350 or the external device interface 370. Also, the audio output unit 325 may output audio stored in the storage 390 under control of the controller 310. The audio output unit 325 may include at least one of a speaker 326, a headphone output terminal 327, a digital interface (DIF) output terminal 328, and a terminal for wirelessly outputting audio to an external device. The audio output unit 325 may include a combination of the speaker 326, the headphone output terminal 327, and the output terminal 328.

The power supply 360 supplies power input from an external power source to the components in the playback device 300 under control of the controller 310.

Through amplification, mixing, and resonance of a broadcast signal received via wired or wireless communication, the tuner 340 may tune and select only a frequency of a channel that the playback device 300 intends to receive from among many radio wave components. The broadcast signal includes audio, a video, and additional information (e.g., an electronic program guide (EPG)).

The tuner 340 may receive broadcast signals in a frequency band corresponding to a channel number (e.g., a cable broadcasting number 506) according to a user input.

The tuner 340 may receive broadcast signals from various sources, such as a terrestrial broadcast, a cable broadcast, a satellite broadcast, or an Internet broadcast. The tuner 340 may also receive broadcast signals from a source, such as an analog broadcast or a digital broadcast. A broadcast signal received through the tuner 340 is decoded (e.g., audio decoding, video decoding, or additional information decoding) and split into audio, video, and/or additional information. The split audio, video, and/or additional information may be stored in the storage 390 under control of the controller 310.

The tuner 340 of the playback device 300 may be one or plural in number. The tuner 340 may be implemented as one body (i.e., all-in-one) with the playback device 300, as a separate device (e.g., a set-top box) having a tuner electrically connected to the playback device 300, or as a tuner connected to the external device interface 370.

The communicator 350 may connect the playback device 300 to an external device (e.g., an audio device, etc.) under control of the controller 310. The controller 310 may transmit and receive content to and from the external device or a server connected through the communicator 350, or perform a search. The communicator 350 may include at least one of a WLAN module 351, a Bluetooth module 352, and a wired Ethernet module 353 corresponding to performance and the structure of the playback device 300. The communicator 350 may include a combination of the WLAN module 351, the Bluetooth module 352, and the wired Ethernet module 353.

For example, the communicator 350 may receive a signal corresponding to a Bluetooth-type user input (e.g., a touch, a press, a touch gesture, voice, or a motion) through the Bluetooth module 352. In addition to Bluetooth, the communicator 350 may further include modules for other short-range communication schemes (e.g., near field communication (NFC)) and Bluetooth low energy (BLE).

The sensor 330 senses the voice, a video, or an interaction of a user.

A microphone 331 receives a sound uttered by the user. The microphone 331 may convert the received voice into an electrical signal and output the electrical signal to the controller 310. The user voice may include, for example, a voice corresponding to a menu or a function of the playback device 300. As the recognition range of the microphone 331, about 4 m or less is recommended between the microphone 331 and the user, and the recognition range of the microphone 331 may vary according to the loudness of a user voice and the surroundings (e.g., speaker sound and ambient noise).

According to an exemplary embodiment, the microphone 331 may receive the sound uttered by the user who looks at the playback device 300 and output the received voice data to the controller 310 so that the controller 310 may use the voice data to determine the identity of the user.

The microphone 331 may be implemented as one body with the playback device 300 or separately from the playback device 300. When the microphone 331 is separately implemented, the microphone 331 may be electrically connected to the playback device 300 through the communicator 350 or the external device interface 370.

Those of ordinary skill in the art will easily appreciate that the microphone 331 may be excluded according to performance and the structure of the playback device 300.

A camera 332 receives a video (e.g., consecutive frames) corresponding to a motion of the user including a gesture within a camera recognition range. For example, the recognition range of the camera 332 may be a distance of about 0.1 m to about 5 m from the camera 332 to the user. A user motion may include a motion of a part of the user's body such as, for example, face movement, facial expression, hand movement, fist movement, or finger movement of the user. Under control of the controller 310, the camera 332 may convert the received video into an electrical signal and output the electrical signal to the controller 310.

According to an exemplary embodiment, the camera 332 may photograph the face of the user who uses the playback device 300 and output the photographed face image to the controller 310 so that the controller 310 may use the face image to determine the identity of the user.

Using the recognition result of a received motion, the controller 310 may select a menu displayed in the playback device 300 or perform control corresponding to the motion recognition result. For example, the control corresponding to the motion recognition result may include channel adjustment, volume adjustment, indicator movement, and cursor movement.

The camera 332 may include a lens and an image sensor. Using a plurality of lenses and image processing, the camera 332 may support optical zooming or digital zooming. The recognition range of the camera 332 may be variously set according to an angle of a camera and a condition of the surroundings. When the camera 332 includes a plurality of cameras, it is possible to receive a three-dimensional (3D) still image or a 3D motion using the plurality of cameras.

The camera 332 may be implemented as one body with the playback device 300 or separately from the playback device 300. An additional device including the separated camera 332 may be electrically connected to the playback device 300 through the communicator 350 or the external device interface 370.

Those of ordinary skill in the art will easily appreciate that the camera 332 may be excluded according to performance and the structure of the playback device 300.

A light receiver 333 receives an optical signal (including a control signal) from an external device through a light-receiving window in a bezel of the display 320. The light receiver 333 may receive an optical signal corresponding to a user input (e.g., a touch, a press, a touch gesture, voice, or a motion) from the external device. The control signal may be extracted from the received optical signal under control of the controller 310.

The external device interface 370 receives a video (e.g., moving images, etc.), audio (e.g., voice, music, etc.), additional information (e.g., an EPG, etc.), etc. from the outside of the playback device 300 under control of the controller 310. The external device interface 370 may include at least one of an HDMI port 371, a component jack 372, a PC port 373, and a USB port 374. The external device interface 370 may include a combination of the HDMI port 371, the component jack 372, the PC port 373, and the USB port 374.

Those of ordinary skill in the art will easily appreciate that the configuration and operation of the external device interface 370 may be variously implemented according to exemplary embodiments.

The controller 310 may control the overall operation of the playback device 300 and signal flow between internal components of the playback device 300, and to process data. When there is an input of the user or a condition which has been preset and stored is satisfied, the controller 310 may execute an operating system (OS) and various applications stored in the storage 390.

The controller 310 may include a random access memory (RAM) 381 which stores a signal or data input from the outside of the playback device 300 or is used as a storage area corresponding to various tasks performed in the playback device 300, a read only memory (ROM) 382 for storing a control program for control for the playback device 300, and a processor 383.

The processor 383 may include a graphic processing unit (GPU) for processing graphics corresponding to a video. The processor 383 may be implemented as an SoC in which a core and the GPU are integrated. The processor 383 may include a single core, a dual-core, a triple-core, a quad-core, or a multiple-core thereof.

The processor 383 may include a plurality of processors. For example, the processor 383 may be implemented as a main processor and a sub-processor operating in a sleep mode.

A graphic processor 384 generates a screen including a variety of objects, such as icons, images, text, etc., using a calculator and a rendering unit. The calculator calculates attribute values, such as the location, the shape, the size, the color, etc. of each object to be displayed, using a user input sensed through the sensor 330 according to the layout of the screen. The rendering unit generates screens of various layouts including objects based on the attribute values calculated by the calculator. The screens generated by the rendering unit are displayed in the display region of the display 320.

First to n-th interfaces 385-1 to 385-n are connected to the various components described above. One of the interfaces 385-1 to 385-n may be a network interface connected to an external device through a network.

The RAM 381, the ROM 382, the processor 383, the graphic processor 384, and the first to n-th interfaces 385-1 to 385-n may be connected to each other through an internal bus 386.

The storage 390 may store various types of data, programs, or applications for operating and controlling the playback device 300 under control of the controller 310. The storage 390 may store input and output signals or data corresponding to operation of the video processor 380, the display 320, the audio processor 315, the audio output unit 325, the sensor 330, the tuner 340, the communicator 350, the power supply 360, and the external device interface 370. The storage 390 may store a control program for control for the playback device 300 and the controller 310, an application originally provided by a manufacturer or externally downloaded, a graphical user interface (GUI) related to the application, objects (e.g., image text, icons, buttons, etc.) for providing the GUI, user information, documents, databases (DBs), or related data.

In an exemplary embodiment, the term "storage" includes the storage 390, the ROM 382 and the RAM 381 of the controller 310, or a memory card (e.g., a micro secure digital (SD) card or a USB memory) installed in the playback device 300. Also, the storage 390 may include a non-volatile memory, a volatile memory, a hard disk drive (HDD), or a solid-state drive (SSD).

The storage 390 may include a broadcast receiving module, a channel control module, a volume control module, a communication control module, a voice recognition module, a motion recognition module, a light receiving module, a display control module, an audio control module, an external input control module, a power control module, a power control module of an external device connected in a wireless manner (e.g., Bluetooth), a voice DB, or a motion DB. The modules and DBs of the storage 390 may be implemented in the form of software for the playback device 300 to perform a broadcast reception control function, a channel control function, a volume control function, a communication control function, a voice recognition function, a motion recognition function, a light reception control function, a display control function, an audio control function, an external input control function, a power control function, or a power control function of the external device connected in a wireless manner (e.g., Bluetooth). The controller 310 may perform each function using the software stored in the storage 390.

The playback device 300 including the display 320 may be electrically connected to an additional external device (e.g., a set-top box) having a tuner.

Meanwhile, the block diagrams of the playback devices 100 and 300 shown in FIGS. 2 and 3 are block diagrams for exemplary embodiments. Components of the block diagrams may be integrated, added, or omitted according to the specifications of the playback devices 100 and 300 implemented in practice. Two or more components may be combined into one component, or one component may be divided into two or more components.

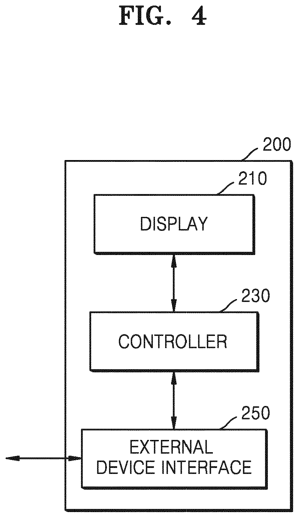

FIG. 4 is a block diagram showing a configuration of a display device according to an exemplary embodiment.

Referring to FIG. 4, the display device 200 may include a display 210, a controller 230, and an external device interface 250.

The display 210 generates a drive signal by converting at least one of a video signal, a data signal, an OSD signal, and a control signal processed by the controller 230. The display 210 may be implemented as a plasma display panel (PDP) display, a liquid crystal display (LCD), an organic light-emitting diode (OLED) display, a flexible display, etc., and may also be implemented as a 3D display. Also, the display 210 may be configured with a touch screen and used as an input device as well as an output device.

The controller 230 may control the overall operation of the display device 200 and signal flow between internal components of the display device 200, and may process a video signal and input the video signal to the display 210. Accordingly, a video corresponding to the video signal may be displayed on the display 210. When a 16:9-type 21:9 video is received from the playback device 100, the controller 230 may remove a black area from the received video and scale the video.

The external device interface 250 receives a video (e.g., moving images, etc.), audio (e.g., voice, music, etc.), additional information (e.g., an EPG, etc.), etc., from an external device (e.g., the playback device 100) under control of the controller 230. The external device interface 250 may include one of an HDMI port, a component jack, a PC port, and a USB port.

Alternatively, the display device 200 may receive a video, audio, additional information, etc. from an external device (e.g., the playback device 100) through short-range communication, such as a WLAN or Bluetooth.

According to an exemplary embodiment, the external device interface 250 may receive a video mixed with a graphic from the playback device 100. Also, through an information frame including information on a frame, the external device interface 250 may receive information indicating that the graphic has been converted.

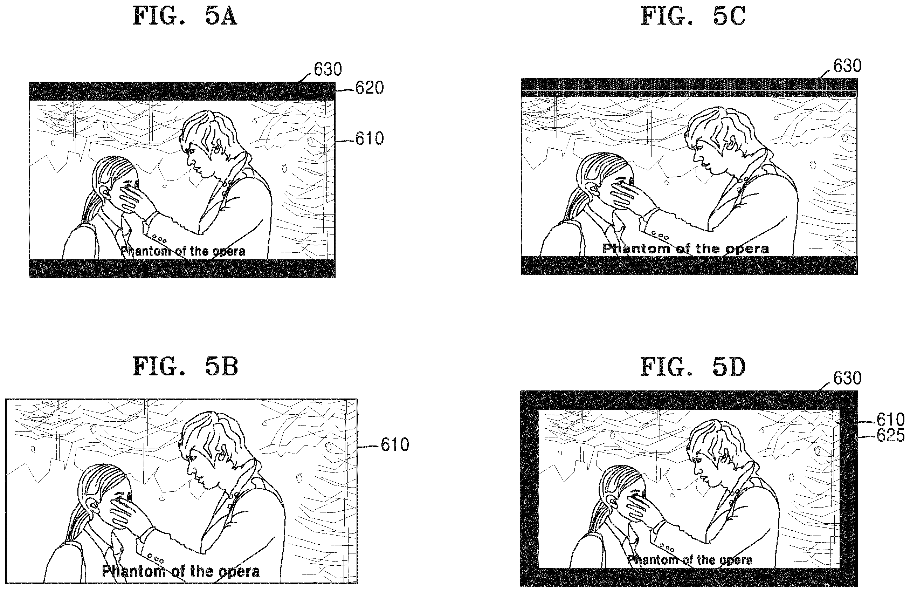

FIG. 5A is a diagram showing 16:9-type 21:9 video content according to an exemplary embodiment, and FIGS. 5B to 5D are diagrams showing examples of the 16:9-type 21:9 video content displayed on a display device having an aspect ratio of 21:9.

Referring to FIG. 5A, a 16:9-type 21:9 video is represented by a video 630 (referred to as "second video" below) which includes a first video 610 having an aspect ratio of 21:9 and a black area 620 and thus has an overall aspect ratio of 16:9. For example, original video content is created as the first video 610 having an aspect ratio of 21:9, but is converted into the second video 630 having an aspect ratio of 16:9 by inserting the black area 620 above and below the first video 610 to conform to a disc format or a streaming format when the video content is recorded in a recording medium or transmitted.

Graphics (e.g., an interactive graphic (IG), a presentation graphic (PG), a background graphic (BG), etc.) stored in the recording medium in which the video content is recorded or graphics (e.g., OSD graphics) generated by the playback device 100 may be displayed on the first video (the video having an aspect ratio of 21:9) 610 and the black area 620. For example, referring to FIG. 5A, a subtitle may be displayed on the first video 610.

Meanwhile, the 16:9-type 21:9 video 630 may be converted into a video having an aspect ratio of 21:9 so that the 16:9-type 21:9 video 630 is displayed on a display device having an aspect ratio of 21:9. For example, as shown in FIG. 5B, when the 16:9-type 21:9 video 630 is converted into the video 610 having an aspect ratio of 21:9 by removing the black area 620 from the 16:9-type 21:9 video 630, a graphic displayed on the black area 620 is also removed and is not displayed.

As shown in FIG. 5C, when the 16:9-type 21:9 video 630 is converted into a video having an aspect ratio of 21:9 by horizontally enlarging the 16:9-type 21:9 video, the video looks spread out horizontally.

As shown in FIG. 5D, when the 16:9-type 21:9 video 630 is converted into a video having an aspect ratio of 21:9 by inserting a black area 625 to the left and right of the video 630 and also to the top and bottom of the video 630, the size of the displayed video 610 is reduced.

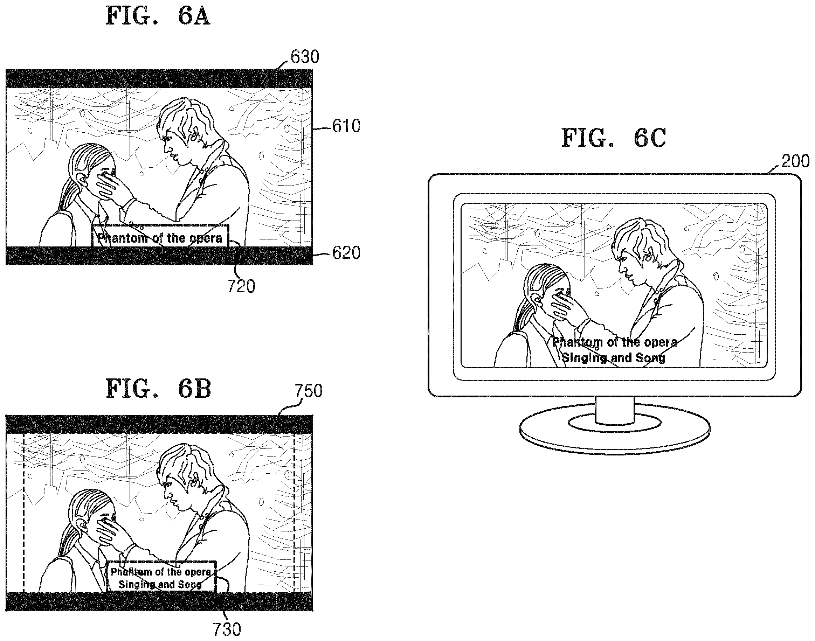

FIGS. 6A to 6C, 7A to 7C, and 8A to 8C are diagrams for describing how a playback device converts a 16:9-type 21:9 video into a video having an aspect ratio of 21:9 according to an exemplary embodiment.

FIG. 6A shows the 16:9-type 21:9 video 630 like FIG. 5A. A graphic 720 (e.g., a subtitle, etc.) stored in a recording medium in which the video content is stored may be displayed on the first video 610.

The playback device 100 may adjust the size or the location of the graphic 720 so that the graphic 720 is positioned in the first video 610. For example, the playback device 100 may set a first region 750 based on the vertical length of the first video 610 and the aspect ratio (16:9) of the second video 630. The first region 750 may be a region having an aspect ratio of 21:9, and the vertical length of the first region 750 may be greater than or equal to the vertical length of the first video 610.

The playback device 100 may reduce the size of the graphic 720 based on a ratio of the size of the first region 750 to the size of the second video (16:9-type 21:9 video) 630. For example, when the horizontal length of the first region 750 is 3/4 of the horizontal length of the whole video and the vertical length of the first region 750 is 3/4 of the vertical length of the whole video, the playback device 100 may reduce the size of the graphic 720 so that the horizontal length of a graphic 730 becomes 3/4 of the horizontal length of the original graphic 720 and the vertical length of the graphic 730 becomes 3/4 of the vertical length of the original graphic 720 as shown in FIG. 6B. Also, the playback device 100 may determine the location of the graphic 730 in the first region 750 to correspond to the relative location of the graphic 720 in the second video 630. For example, as shown in FIG. 6B, the location of the graphic 730 may be determined so that the graphic (subtitle) 720 positioned at a first point is positioned at a second point.

Alternatively, by changing only the location of the graphic 720 without changing the size, the playback device 100 may convert the graphic 720 to be positioned in the first video 610.

Alternatively, by increasing the size of the graphic 720 and changing the location of the graphic 720, the playback device 100 may convert the graphic 720 to be positioned in the first video 610.

Alternatively, by changing only the size of the graphic 720 without changing the location, the playback device 100 may convert the graphic 720 to be positioned in the first video 610.

The playback device 100 may mix the graphic 730 whose size and/or location has been adjusted and the 16:9-type 21:9 video (second video) 630. The playback device 100 may transmit the video mixed with the graphic to the display device 200 through an external device interface (e.g., the HDMI port, etc.). At this time, the playback device 100 may transmit information indicating that the graphic 730 has been converted according to a 21:9 video. For example, the playback device 100 may transmit the information indicating that the graphic 730 has been converted to the display device 200 through an information frame including information on a frame.

Referring to FIG. 6C, the display device 200 may remove a black area from the received video, and display the video (having an aspect ratio of 21:9) from which the black area has been removed according to the size and the aspect ratio of a display.

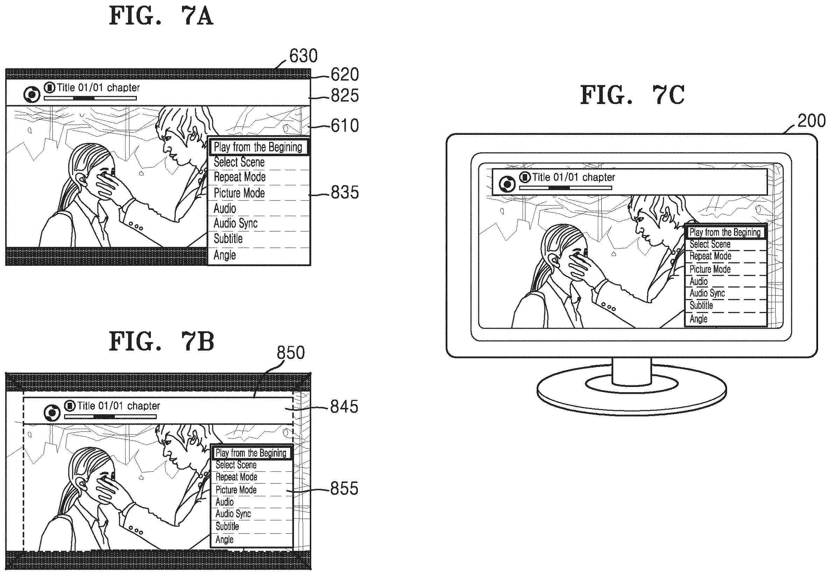

FIG. 7A shows the 16:9-type 21:9 video 630 like FIG. 5A. On-screen display (OSD) graphics (e.g., a timeline video 825 showing a total running time and a current playing time point of video content, and a menu screen 835) generated by the playback device 100 may be displayed on the first video (the video having an aspect ratio of 21:9) 610 and the black area 620. The OSD graphics may include graphics of various types of information displayed on the screen based on a user input signal. For example, the OSD graphics may include various graphics, such as a user interface screen, various menu screens, widgets, or icons.

The playback device 100 may adjust the sizes or the locations of the OSD graphics 825 and 835 so that the OSD graphics 825 and 835 are positioned in the first video 610. For example, as described with reference to FIG. 6, a first region 850 may be set, and the sizes of the OSD graphics 825 and 835 may be horizontally and vertically reduced based on the set first region 850.

The locations of the OSD graphics 825 and 835 may be adjusted so that the OSD graphics 825 and 835 are positioned within the first region 850. For example, as shown in FIG. 7A, when the OSD graphic 825 is displayed at the upper end of the first video 610, a downsized OSD graphic 845 may be moved down and displayed. Also, when the OSD graphic 835 is displayed at the lower right corner of the first video 610, a downsized OSD graphic 855 may be moved to the upper left and displayed, and when an OSD graphic is displayed at the left of the first video 610, a downsized OSD graphic may be moved to the right and displayed. However, location adjustment of an OSD graphic is not limited to these cases.

The playback device 100 may mix the OSD graphics 845 and 855, which have sizes and locations changed to be placed within the first region 850, with the 16:9-type 21:9 video (second video) 630. The playback device 100 may transmit the mixed video to the display device 200 through an external device interface (e.g., the HDMI port, etc.). The playback device 100 may also transmit information indicating that the graphics have been converted according to the 21:9 video. For example, the playback device 100 may transmit the information indicating that the graphics have been converted to the display device 200 through an information frame including information on a frame.

Referring to FIG. 7C, the display device 200 may remove a black area from the received area, and display the video (having an aspect ratio of 21:9) from which the black area has been removed according to the size and the aspect ratio of the display.

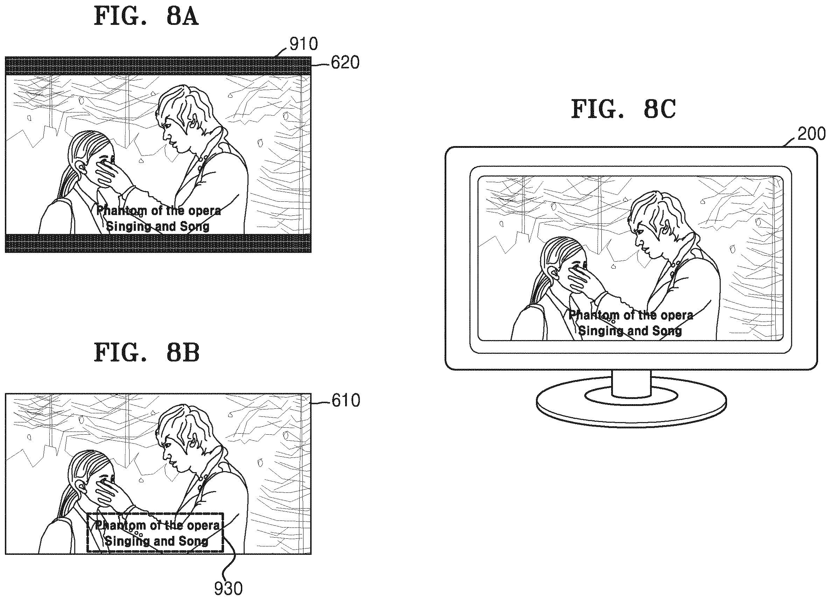

FIG. 8A shows a 16:9-type 21:9 video 910 in which the size or the location of a graphic has been adjusted as described with reference to FIG. 6B so that the graphic is positioned in the first video 610.

The playback device 100 according to the exemplary embodiment may remove the black area 620 from the 16:9-type 21:9 video 910, mix the video (having an aspect ratio of 21:9) from which the black area 620 has been removed, with a graphic 930 that has an adjusted size and an adjusted location. The playback device 100 may transmit the mixed video to the display device 200.

Although a method has been illustrated in connection with only a subtitle in FIG. 8, substantially the same method may be applied to OSD graphics.

Accordingly, referring to FIG. 8C, the display device 200 may display the received video according to the size and the aspect ratio of the display.

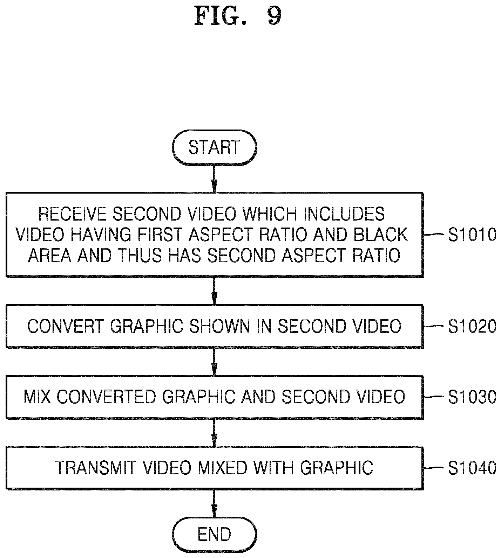

FIG. 9 is a flowchart illustrating an operating method of a playback device according to an exemplary embodiment.

Referring to FIG. 9, the playback device 100 according to the exemplary embodiment may receive a second video which includes a main content video having a first aspect ratio and a black area (operation S1010). The second video may have a second aspect ratio different from the first aspect ratio.

For example, the first aspect ratio may be 21:9, and the second aspect ratio may be 16:9. The second video may be referred to as a 16:9-type 21:9 video. As described with reference to FIG. 6A, the 16:9-type 21:9 video represents a video which includes a first video having an aspect ratio of 21:9 and a black area, and thus has an overall aspect ratio of 16:9. However, the first aspect ratio, the second aspect ratio, and the second video are not limited thereto.

When a recording medium in which video content (e.g., 16:9-type 21:9 video content) having the second aspect ratio is recorded is inserted into the playback device 100, the playback device 100 may load the video content recorded in the recording medium. Alternatively, the playback device 100 may receive the video content having the second aspect ratio from an external device.

Alternatively, the playback device 100 may receive the video (21:9 video) having the first aspect ratio, and convert the received 21:9 video into the second video having an aspect ratio of 16:9 by inserting a black area in the 21:9 video.

The playback device 100 may convert graphics shown in the second video (operation S1020).

For example, the graphics may include a first graphic and a second graphic. The first graphic may be a graphic stored in a recording medium in which the video content is recorded, and may include an interactive graphic (IG), a presentation graphic (PG), or a background graphic (BG). Also, the second graphic may be a graphic generated by the playback device 100, and may include an OSD graphic.

The playback device 100 may adjust the sizes and the locations of the graphics so that the graphics are positioned in the first video.

The playback device 100 according to the exemplary embodiment may mix the graphics, which have adjusted sizes and locations, with the second video (16:9-type 21:9 video) (operation S1030).

The playback device 100 according to the exemplary embodiment may transmit the video mixed with the graphics to the display device 200 through an external device interface (e.g., the HDMI port, etc.) (operation S1040). Also, the playback device 100 may transmit information indicating that the graphics have been converted through an information frame including information on a frame.

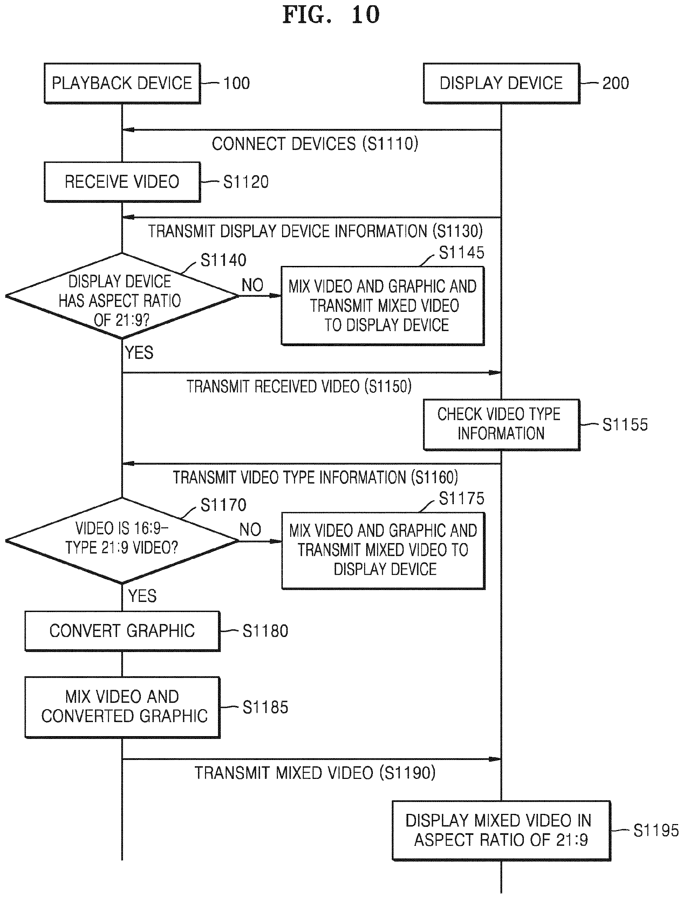

FIG. 10 is a sequence diagram illustrating an operating method of a playback system according to an exemplary embodiment.

Referring to FIG. 10, the playback device 100 and the display device 200 may be connected (operation S1110). For example, the display device 200 may be connected to the playback device 100 through at least one of several ports, such as the HDMI port, the component jack, the PC port, the USB port, etc., and receive a video, audio, and additional information.

The playback device 100 may receive a video (operation S1120).

For example, when a recording medium in which video content is recorded is inserted into the playback device 100, the playback device 100 may load the video content recorded in the recording medium. Alternatively, the playback device 100 may receive video content from an external device.

The display device 200 may transmit display device information to the playback device 100 (operation S1130). For example, the display device information (e.g., extended display identification data (EDID) information) may include information on the aspect ratio of a display included in the display device 200, and the aspect ratio of the display may be 21:9, 16:9, or 4:3.

The playback device 100 may determine whether the display device is a 21:9 display device (a display device whose display has an aspect ratio of 21:9) based on the display device information received from the display device 200 (operation S1140).

When the display device 200 is not a 21:9 display device, the playback device 100 may mix the received video and graphics without adjusting the sizes or locations of the received video and the graphic (operation S1145). When the display device 200 is a 21:9 display device, the playback device 100 may determine whether the received video is a 16:9-type 21:9 video (operation S1170).

At this time, the playback device 100 may transmit the received video to the display device 200 (operation S1150). The display device 200 may check type information of the received video by sensing whether or not there is a black area, the location of the black area, a ratio of the black area to the entire area of the video (operation S1155).

Accordingly, the display device 200 may transmit the checked video type information to the playback device 100 (operation S1160), and the playback device 100 may determine whether the video is a 16:9-type 21:9 video based on the received video type information or video format information.

Alternatively, the playback device 100 may determine by itself whether the video is a 16:9-type 21:9 video by sensing whether or not there is a black area, the location of the black area, a ratio of the area of the black area to the entire area of the video. In that case, operations S1150 and S1160 may be omitted from FIG. 10 and the playback device 100 may perform operation S1155,

When the video is not a 16:9-type 21:9 video, the playback device 100 may mix the video and graphics and transmit the mixed video to the display device 200 (operation S1175).

When the video is a 16:9-type 21:9 video, the playback device 100 may convert graphics (operation S1180).

For example, the graphics may include a first graphic and a second graphic. The first graphic may be a graphic stored in a recording medium in which the video content is recorded, and may include an interactive graphic (IG), a presentation graphic (PG), and a background graphic (BG). Also, the second graphic may be a graphic generated by the playback device 100, and may include an OSD graphic.

The playback device 100 may adjust the sizes and the locations of the graphics so that the graphics are positioned in a first video included in the 16:9-type 21:9 video.

The playback device 100 according to the exemplary embodiment may mix the graphics, which have adjusted sizes and locations, with a second video (16:9-type 21:9 video) (operation S1185).

The playback device 100 according to the exemplary embodiment may transmit the mixed video and information indicating that the graphics have been converted to the display device 200.

The display device 200 may receive the mixed video and frame information, and display the received video on the display having an aspect ratio of 21:9 (operation S1195).

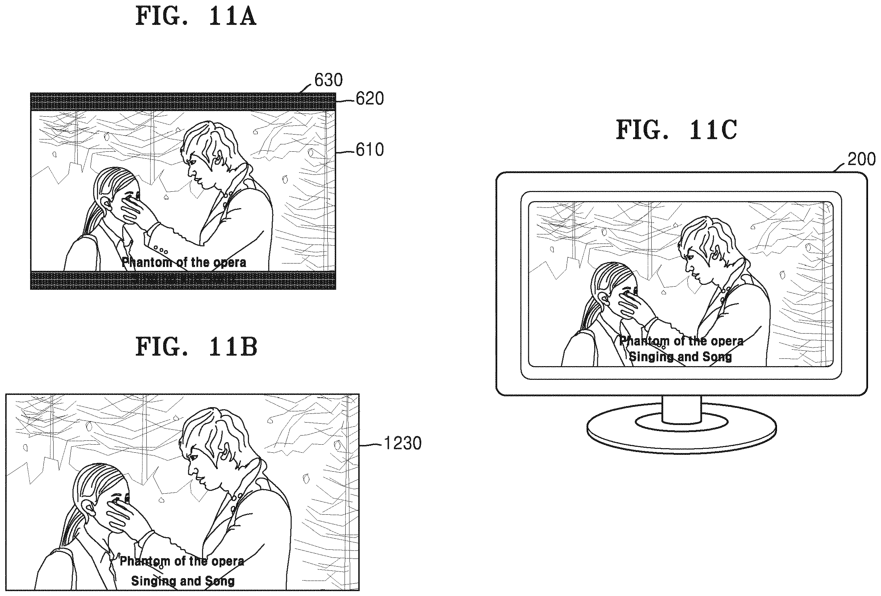

FIGS. 11A to 11C are diagrams with reference to which a playback device converts a 16:9-type 21:9 video into a video having an aspect ratio of 21:9 according to another exemplary embodiment.

FIG. 11A shows the 16:9-type 21:9 video 630 like FIG. 5A. A graphic (e.g., a subtitle, etc.) stored in a recording medium in which the video content is stored or a graphic (e.g., an OSD graphic) generated by the playback device 100 may be displayed on the first video (having an aspect ratio of 21:9) 610 and the black area 620. However, the displayed location of the graphic is not limited to an area of the first video 610, and may be displayed on the black area 620. In that case, the color of the graphic may be different from the black area 620. For example, the color of the graphic may be white. Although the area 620 is referred to as "black area," the area may have a color different from black.

The playback device 100 may adjust the size of the first video 610 so that the graphic is positioned in the first video 610. For example, as shown in FIG. 11B, a second region 1230 may be set based on the vertical length of the second video 630 and the aspect ratio (21:9) of the first video 610. The second region 1230 may have an aspect ratio of 21:9, and the vertical length of the second region 1230 may be greater than or equal to the vertical length of the second video 630. Also, the second region 1230 may be set so that the center of the second region 1230 becomes identical to the center of the first video 610.

When the second region 1230 is set, the playback device 100 may remove the black area 620 from the second video 630, and enlarge the first video 610 to have substantially the same size as the second region 1230. Accordingly, the graphic (a subtitle) may be positioned in the enlarged first video.

The playback device 100 may mix the enlarged first video and the graphic, and transmit the video mixed with the graphic to the display device 200 through an external device interface (e.g., the HDMI port, etc.).

Referring to FIG. 11C, the display device 200 may control the received video to be displayed on the display having the aspect ratio of 21:9.

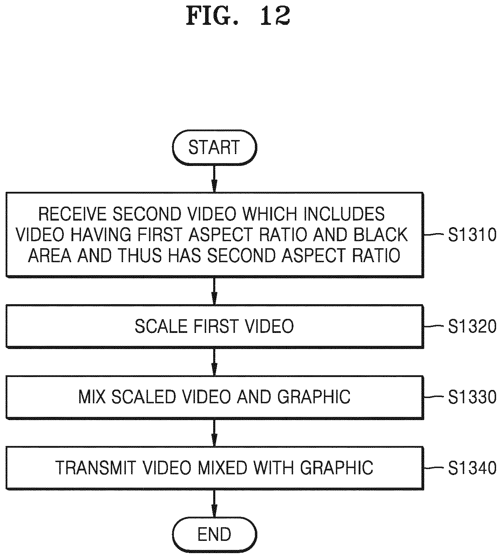

FIG. 12 is a flowchart illustrating an operating method of a playback device according to another exemplary embodiment.

Referring to FIG. 12, the playback device 100 according to the exemplary embodiment may receive a second video which includes a video having a first aspect ratio and a black area (operation S1310). The second video may have a second aspect ratio different from the first aspect ratio.

Operation S1310 of FIG. 12 is substantially the same as operation S1010 of FIG. 9, and thus a detailed description thereof will be omitted.

The playback device 100 may scale a first video (operation S1320).

For example, the playback device 100 may remove the black area from the second video, and scale the first video so that a graphic is positioned in the first video. When the display device 200 displays an original version of the first video which is not scaled according to operation 1320, the graphic may displayed on the black area, for example, according to a default setting of the playback device 100 or the display device 200. This has been described in detail with reference to FIG. 11, and a detailed description thereof will be omitted.

The playback device 100 according to the exemplary embodiment may mix the scaled video and the graphic (operation S1330).

The playback device 100 according to the exemplary embodiment may transmit the video mixed with the graphic to the display device 200 through an external device interface (e.g., the HDMI port, etc.) (operation S1340).

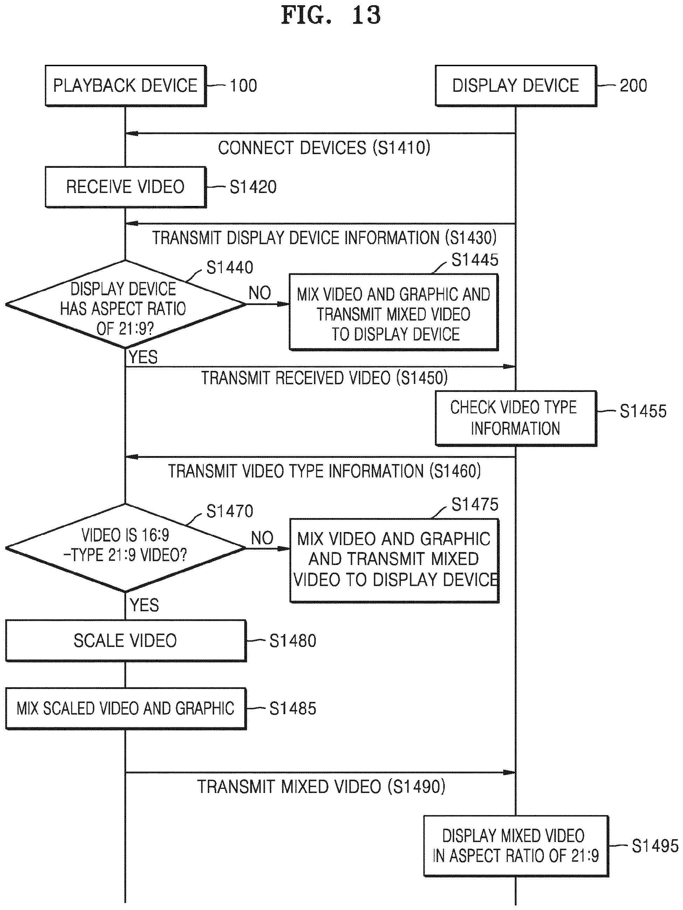

FIG. 13 is a sequence diagram illustrating an operating method of a playback system according to another exemplary embodiment.

Referring to FIG. 13, operation 1410 (operation S1410) to operation 1475 (operation S1475) of FIG. 13 correspond to operation 1110 (operation S1110) to operation 1175 (operation S1175) of FIG. 10, respectively, and thus a detailed description of operation 1410 (operation S1410) to operation 1475 (operation S1475) will be omitted.

When the second video is a 16:9-type 21:9 video, the playback device 100 according to the exemplary embodiment may scale the second video (operation S1480).

For example, the playback device 100 may remove the black area from the second video and scale the first video so that the graphic is positioned in the first video. This has been described in detail with reference to FIG. 11, and a detailed description thereof will be omitted.

The playback device 100 according to the exemplary embodiment may mix the scaled video and the graphic (operation S1485).

In an exemplary embodiment, even when a black area included in 16:9-type 21:9 video content is removed and the resultant video content is enlarged and displayed according to a 21:9 display, graphics (e.g., subtitles or OSD graphics) may be displayed without being cut off.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, it is understood that in exemplary embodiments, one or more units of the above-described apparatuses and devices can include circuitry, a processor, a microprocessor, etc., and may execute a computer program stored in a computer-readable medium.

The recording medium may store a program that is executable by a playback device 100 or a display device 200 to perform an operation of determining an aspect ratio of the display device 200, an operation of determining whether a moving image includes a main content area (e.g., an area in which a first video 610 is reproduced) and a black bar area 620 and whether the main content area includes a graphic (e.g., subtitle) overlaid on the moving image, an operation of determining whether an aspect ratio of the main content area is greater than the aspect ratio of the display device 200, and an operation of changing at least one of a location and a size of a graphic based on a difference between the aspect ratio of the main content area and the aspect ratio of the display device 200 in response to the aspect ratio of the main content area being greater than the aspect ratio of the display device 200.

The recording medium may store a program that is executable by a playback device 100 or a display device 200 to perform an operation of determining an aspect ratio of the display device 200, an operation of determining whether a moving image includes a main content area (e.g., an area in which a first video 610 is reproduced) and a black bar area 620 and whether the main content area includes a graphic (e.g., subtitle) overlaid on the moving image, an operation of determining whether an aspect ratio of the main content area is greater than the aspect ratio of the display device 200, and an operation of changing at least one of a location and a size of a graphic based on a difference between the aspect ratio of the main content area and the aspect ratio of the display device 200 in response to the aspect ratio of the main content area being greater than the aspect ratio of the display device 200.

The foregoing exemplary embodiments are merely exemplary and are not to be construed as limiting. The present teaching can be readily applied to other types of apparatuses. The invention is defined by the appended claims.

## Claims

1. A playback device for playing video content, the playback device comprising:
a controller (130) configured to:
obtain a first video (630) having a first aspect ratio and including a black area (620);
obtain a graphic positioned for display in the black area (620)
adjust at least one of a size and a location of the graphic to position the adjusted graphic within a second video (610) having a second aspect ratio, and
mix the first video with the adjusted graphic to obtain a mixed first video; and
an external device interface (150) configured to transmit the mixed first video and information indicating that the graphic included in the mixed first video is an adjusted graphic to a display device (200) having the second aspect ratio, to cause the display device to identify that the mixed first video includes the adjusted graphic and remove the black area from the mixed first video,
wherein the mixed first video includes the second video and the black area.

2. The playback device of claim 1, wherein the first aspect ratio is 16:9, and
the second aspect ratio is greater than 16:9.

3. The playback device of claim 1 or claim 2, wherein the controller is further configured to receive device information from the display device and determine whether the display device is a display device having the second aspect ratio.

4. The playback device of any one of claims 1 to 3, wherein the controller is further configured to determine whether the first video includes a video having an aspect ratio greater than 16:9 based on the black area included in the first video.

5. The playback device of any one of claims 1 to 3, wherein the external device interface is further configured to transmit the first video to the display device and receive video type information of the first video from the display device, and
the controller is further configured to determine whether the first video has an aspect ratio of 16:9 and includes a video having an aspect ratio greater than 16:9 based on the video type information.

6. An operating method of a playback device for playing video content, the operating method comprising:
obtaining a first video (630) having a first aspect ratio and including a black area 620);
obtaining a graphic positioned for display in the black area (620)
adjusting at least one of a size and a location of the graphic to position the adjusted graphic within a second video (610) having a second aspect ratio;
mixing the first video with the adjusted graphic to obtain a mixed first video; and
transmitting the mixed first video and information indicating that the graphic included in the mixed first video is an adjusted graphic to a display device (200) having the second aspect ratio, to cause the display device to identify that the mixed first video includes the adjusted graphic and remove the black area from the mixed first video,
wherein the mixed first video includes the second video and the black area.

7. The operating method of claim 6, wherein the first aspect ratio is 16:9, and
the second aspect ratio is greater than 16:9.

8. The operating method of claim 6 or claim 7, further comprising:
receiving device information from the display device; and
determining whether the display device is a display device having the second aspect ratio.

9. The operating method of any one of claims 6 to 8, further comprising determining whether the first video includes a video having an aspect ratio greater than 16:9 based on the black area included in the first video.

10. The operating method of any one of claims 6 to 8, further comprising:
transmitting the first video to the display device;
receiving video type information of the first video from the display device; and
determining whether the first video has an aspect ratio of 16:9 and includes a video having an aspect ratio greater than 16:9 based on the video type information.

11. A non-transitory computer-readable recording medium storing a program that is executable by a computer to perform the method of any one of claims 6 to 10.

## Patentansprüche

1. Wiedergabevorrichtung zum Abspielen von Videoinhalt, wobei die Wiedergabevorrichtung Folgendes umfasst:
einen Kontroller (130), der konfiguriert ist, um:
ein erstes Video (630) zu erhalten, das ein erstes Bildseitenverhältnis aufweist und einen schwarzen Bereich (620) beinhaltet;
eine zur Anzeige in dem schwarzen Bereich (620) positionierte Grafik zu erhalten;
eine Größe und/oder eine Lage der Grafik anzupassen, um die angepasste Grafik in einem zweiten Video (610) mit einem zweiten Bildseitenverhältnis zu positionieren, und
das erste Video mit der angepassten Grafik zu mischen, um ein gemischtes erstes Video zu erhalten; und
eine externe Vorrichtungsschnittstelle (150), die dazu konfiguriert ist, das gemischte erste Video und Informationen, die angeben, dass es sich bei der in dem gemischten ersten Video enthaltenen Grafik um eine angepasste Grafik handelt, zu einer Anzeigevorrichtung (200) mit dem zweiten Bildseitenverhältnis zu übertragen, um die Anzeigevorrichtung zu veranlassen, festzustellen, dass das gemischte erste Video die angepasste Grafik beinhaltet, und den schwarzen Bereich aus dem gemischten ersten Video zu entfernen,
wobei das gemischte erste Video das zweite Video und den schwarzen Bereich beinhaltet.

2. Wiedergabevorrichtung nach Anspruch 1, wobei das erste Bildseitenverhältnis 16 : 9 beträgt, und
das zweite Bildseitenverhältnis mehr als 16 : 9 beträgt.

3. Wiedergabevorrichtung nach Anspruch 1 oder Anspruch 2, wobei der Kontroller weiter dazu konfiguriert ist, Vorrichtungsinformationen von der Anzeigevorrichtung zu empfangen und zu bestimmen, ob es sich bei der Anzeigevorrichtung um eine Anzeigevorrichtung mit dem zweiten Bildseitenverhältnis handelt.

4. Wiedergabevorrichtung nach einem der Ansprüche 1 bis 3, wobei der Kontroller weiter dazu konfiguriert ist, basierend auf dem in dem ersten Video enthaltenen schwarzen Bereich zu bestimmen, ob das erste Video ein Video mit einem Bildseitenverhältnis von mehr als 16 : 9 beinhaltet.

5. Wiedergabevorrichtung nach einem der Ansprüche 1 bis 3, wobei die externe Vorrichtungsschnittstelle weiter dazu konfiguriert ist, das erste Video zu der Anzeigevorrichtung zu übertragen und Videotypinformationen des ersten Videos von der Anzeigevorrichtung zu empfangen, und
der Kontroller weiter dazu konfiguriert ist, basierend auf den Videotypinformationen zu bestimmen, ob das erste Video ein Bildseitenverhältnis von 16 : 9 aufweist und ein Video mit einem Bildseitenverhältnis von mehr als 16 : 9 beinhaltet.

6. Betriebsverfahren einer Wiedergabevorrichtung zum Abspielen von Videoinhalt, wobei das Betriebsverfahren Folgendes umfasst:
Erhalten eines ersten Videos (630), das ein erstes Bildseitenverhältnis aufweist und einen schwarzen Bereich (620) beinhaltet;
Erhalten einer zur Anzeige in dem schwarzen Bereich (620) positionierten Grafik;
Anpassen einer Größe und/oder einer Lage der Grafik, um die angepasste Grafik in einem zweiten Video (610) mit einem zweiten Bildseitenverhältnis zu positionieren;
Mischen des ersten Videos mit der angepassten Grafik, um ein gemischtes erstes Video zu erhalten; und
Übertragen des gemischten ersten Videos und von Informationen, die angeben, dass es sich bei der in dem gemischten ersten Video enthaltenen Grafik um eine angepasste Grafik handelt, zu einer Anzeigevorrichtung (200) mit dem zweiten Bildseitenverhältnis, um die Anzeigevorrichtung zu veranlassen, festzustellen, dass das gemischte erste Video die angepasste Grafik beinhaltet, und den schwarzen Bereich aus dem gemischten ersten Video zu entfernen,
wobei das gemischte erste Video das zweite Video und den schwarzen Bereich beinhaltet.

7. Betriebsverfahren nach Anspruch 6, wobei das erste Bildseitenverhältnis 16 : 9 beträgt und das zweite Bildseitenverhältnis mehr als 16 : 9 beträgt.

8. Betriebsverfahren nach Anspruch 6 oder Anspruch 7, das weiter Folgendes umfasst:
Empfangen von Vorrichtungsinformationen von der Anzeigevorrichtung; und
Bestimmen, ob es sich bei der Anzeigevorrichtung um eine Anzeigevorrichtung mit dem zweiten Bildseitenverhältnis handelt.

9. Betriebsverfahren nach einem der Ansprüche 6 bis 8, weiter umfassend das Bestimmen, basierend auf dem in dem ersten Video enthaltenen schwarzen Bereich, ob das erste Video ein Video mit einem Bildseitenverhältnis von mehr als 16 : 9 beinhaltet.

10. Betriebsverfahren nach einem der Ansprüche 6 bis 8, das weiter Folgendes umfasst:
Übertragen des ersten Videos zu der Anzeigevorrichtung;
Empfangen von Videotypinformationen des ersten Videos von der Anzeigevorrichtung; und
Bestimmen, basierend auf den Videotypinformationen, ob das erste Video ein Bildseitenverhältnis von 16 : 9 aufweist und ein Video mit einem Bildseitenverhältnis von mehr als 16 : 9 beinhaltet.

11. Nichtflüchtiges computerlesbares Aufzeichnungsmedium, das ein Programm speichert, das von einem Computer ausführbar ist, um das Verfahren nach einem der Ansprüche 6 bis 10 auszuführen.

## Revendications

1. Dispositif de lecture destiné à lire un contenu vidéo, le dispositif de lecture comprenant :
un contrôleur (130) configuré pour :
obtenir une première vidéo (630) ayant un premier rapport de format et comportant une zone noire (620) ;
obtenir un graphique positionné pour être affiché dans la zone noire (620) ;
régler une taille et/ou un emplacement du graphique pour positionner le graphique réglé dans une seconde vidéo (610) ayant un second rapport de format ; et
mélanger la première vidéo avec le graphique réglé afin d'obtenir une première vidéo mélangée ; et
une interface de dispositif externe (150) configurée pour émettre, vers un dispositif d'affichage (200) ayant le second rapport de format, la première vidéo mélangée et une information indiquant que le graphique inclus dans la première vidéo mélangée est un graphique réglé, pour amener le dispositif d'affichage à identifier que la première vidéo mélangée inclut le graphique réglé, et à supprimer la zone noire de la première vidéo mélangée,
la première vidéo mélangée incluant la seconde vidéo et la zone noire.

2. Dispositif de lecture selon la revendication 1, dans lequel le premier rapport de format est 16:9, et le second rapport de format est supérieur à 16:9.

3. Dispositif de lecture selon la revendication 1 ou 2, dans lequel le contrôleur est en outre configuré pour recevoir une information de dispositif en provenance du dispositif d'affichage, et déterminer si le dispositif d'affichage est un dispositif d'affichage ayant le second rapport de format.

4. Dispositif de lecture selon l'une quelconque des revendications 1 à 3, dans lequel le contrôleur est en outre configuré pour déterminer si la première vidéo inclut une vidéo ayant un rapport de format supérieur à 16:9 sur la base de la zone noire incluse dans la première vidéo.

5. Dispositif de lecture selon l'une quelconque des revendications 1 à 3, dans lequel l'interface de dispositif externe est en outre configurée pour émettre la première vidéo vers le dispositif d'affichage, et recevoir une information de type de vidéo de la première vidéo en provenance du dispositif d'affichage, et
le contrôleur est en outre configuré pour déterminer si la première vidéo a un rapport de format de 16:9 et inclut une vidéo ayant un rapport de format supérieur à 16:9 sur la base de l'information de type de vidéo.

6. Procédé de fonctionnement d'un dispositif de lecture destiné à lire un contenu vidéo, le procédé de fonctionnement consistant à :
obtenir une première vidéo (630) ayant un premier rapport de format et comportant une zone noire (620) ;
obtenir un graphique positionné pour être affiché dans la zone noire (620) ;
régler une taille et/ou un emplacement du graphique pour positionner le graphique réglé dans une seconde vidéo (610) ayant un second rapport de format ;
mélanger la première vidéo avec le graphique réglé afin d'obtenir une première vidéo mélangée ; et
émettre, vers un dispositif d'affichage (200) ayant le second rapport de format, la première vidéo mélangée et une information indiquant que le graphique inclus dans la première vidéo mélangée est un graphique réglé, pour amener le dispositif d'affichage à identifier que la première vidéo mélangée inclut le graphique réglé, et à supprimer la zone noire de la première vidéo mélangée, la première vidéo mélangée incluant la seconde vidéo et la zone noire.

7. Procédé de fonctionnement selon la revendication 6, dans lequel le premier rapport de format est 16:9, et le second rapport de format est supérieur à 16:9.

8. Procédé de fonctionnement selon la revendication 6 ou 7, consistant en outre à :
recevoir une information de dispositif en provenance du dispositif d'affichage ; et
déterminer si le dispositif d'affichage est un dispositif d'affichage ayant le second rapport de format.

9. Procédé de fonctionnement selon l'une quelconque des revendications 6 à 8, consistant en outre à déterminer si la première vidéo inclut une vidéo ayant un rapport de format supérieur à 16:9 sur la base de la zone noire incluse dans la première vidéo.

10. Procédé de fonctionnement selon l'une quelconque des revendications 6 à 8, consistant en outre à :
émettre la première vidéo vers le dispositif d'affichage ;
recevoir une information de type de vidéo de la première vidéo en provenance du dispositif d'affichage ; et
déterminer si la première vidéo a un rapport de format de 16:9 et inclut une vidéo ayant un rapport de format supérieur à 16:9 sur la base de l'information de type de vidéo.

11. Support d'enregistrement non temporaire lisible par ordinateur stockant un programme qui peut être exécuté par un ordinateur pour réaliser le procédé selon l'une quelconque des revendications 6 à 10.
